(19) **Europäisches Patentamt**

**European Patent Office**

**Office européen des brevets**

(11) **EP 1 456 318 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(21) Anmeldenummer: **02798339.4**

(22) Anmeldetag: **16.12.2002**

(51) Int Cl.:
*C09J 9/00* (2006.01)       *C09J 5/06* (2006.01)
*C01G 49/00* (2006.01)       *H01F 1/36* (2006.01)

(86) Internationale Anmeldenummer:
**PCT/EP2002/014307**

(87) Internationale Veröffentlichungsnummer:
**WO 2003/054102 (03.07.2003 Gazette 2003/27)**

(54) **NANOPARTIKULÄRE ZUBEREITUNG**

**NANOPARTICULATE PREPARATION**

**PREPARATION NANOPARTICULAIRE**

(84) Benannte Vertragsstaaten:
**AT BE BG CH CY CZ DE DK EE ES FI FR GB GR IE IT LI LU MC NL PT SE SI SK TR**

(30) Priorität: **21.12.2001 DE 10163399**

(43) Veröffentlichungstag der Anmeldung:
**15.09.2004 Patentblatt 2004/38**

(73) Patentinhaber: **Sus Tech GmbH & Co. KG**
**64287 Darmstadt (DE)**

(72) Erfinder:
• **SAUER, Hans-Martin**
  **64297 Darmstadt (DE)**
• **CURA, Elisabeth**
  **64283 Darmstadt (DE)**
• **ELGIMIABI, Sohaib**
  **63303 Dreieich (DE)**
• **HEMPELMANN, Rolf**
  **66386 St. Ingbert (DE)**
• **MEYER, Frank**
  **66111 Saarbrücken (DE)**
• **SPIEKERMANN, Stefan**
  **64285 Darmstadt (DE)**

(74) Vertreter: **Kann, Wolfgang**
  **c/o Henkel KGaA**
  **Patente (VTP)**
  **40191 Düsseldorf (DE)**

(56) Entgegenhaltungen:
**WO-A-01/14490**       **WO-A-01/28771**
**DE-A- 19 800 294**

• **FANNIN P C ET AL: "Field dependence of the dynamic properties of colloidal suspensions of Mn0.66Zn0.34Fe2O4 and Ni0.5Zn0.5Fe2O4 particles - Condens. Matter" JOURNAL OF MAGNETISM AND MAGNETIC MATERIALS, ELSEVIER SCIENCE PUBLISHERS, AMSTERDAM, NL, Bd. 201, Nr. 1-3, Juli 1999 (1999-07), Seiten 98-101, XP004181207 ISSN: 0304-8853**
• **BHOSALE D N ET AL: "BULK MAGNETIC STUDIES ON CU-MG-ZN FERRITES" JOURNAL OF MATERIALS SCIENCE. MATERIALS IN ELECTRONICS, CHAPMAN AND HALL, LONDON, GB, Bd. 9, Nr. 5, Oktober 1998 (1998-10), Seiten 331-336, XP000824175 ISSN: 0957-4522**
• **FANNIN P C ET AL: "On the Dynamic Properties of Colloidal Suspensions of MnxFe1-xFe2O4Spinal Ferrite Particles as a Function Of Stoichiometry" MAGNETICS CONFERENCE, 1997. DIGESTS OF INTERMAG '97., 1997 IEEE INTERNATIONAL NEW ORLEANS, LA, USA 1-4 APRIL 1997, NEW YORK, NY, USA, IEEE, US, 1. April 1997 (1997-04-01), Seiten BR-24-BR-24, XP010229906 ISBN: 0-7803-3862-6**
• **A. DIAS, R. L. MOREIRA, N. D. S: MOHALLEM: "Sintering Studies of Hydrothermal NiZn Ferrites" J. PHYS. CHEM. SOLIDS, Bd. 58, Nr. 4, 23. August 1996 (1996-08-23), Seiten 543-549, XP002233073**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft nanopartikuläre Zubereitungen, die wenigstens ein Metallmischoxid in Form superparamagnetischer, nanoskaliger Teilchen enthalten, ein Verfahren zum Erwärmen einer solchen Zubereitung sowie Verfahren zum Herstellen und Lösen von Klebeverbindungen auf Basis dieser Zubereitungen.

Zubereitungen von Teilchen mit Teilchengrößen im Nanometerbereich (nanoskalige Teilchen) haben in vielen Bereichen der Technik Anwendung gefunden. Dies gilt speziell für Dispersionen, die Teilchen mit magnetischen, ferroelektrischen oder piezoelektrischen Eigenschaften enthalten und die sich unter Einwirkung magnetischer, elektrischer oder elektromagnetischer Wechselfelder erwärmen lassen. Diese dienen beispielsweise der Herstellung von Klebe- und Dichtmitteln, die in Folge der durch das Anlegen magnetischer, elektrischer oder elektromagnetischer Wechselfelder induzierten Erwärmung aushärten oder wobei ein bestehender Klebeverbund getrennt wird. Derartige Klebe- und Dichtmittel werden in vielen Industriezweigen, insbesondere in der metallverarbeitenden Industrie, wie z. B. der Flugzeugindustrie, der Fahrzeugindustrie, im Nutzfahrzeugbau sowie deren Zulieferindustrien oder auch bei der Herstellung von Maschinen und Haushaltsgeräten und in der Bauindustrie zunehmend eingesetzt, um gleiche oder verschiedene metallische und nicht metallische Substrate klebend bzw. abdichtend miteinander zu verbinden. Diese Art des Fügens von Bauteilen ersetzt in zunehmendem Maße die klassischen Fügeverfahren, wie Nieten, Schrauben oder Schweißen, weil sie eine Vielzahl von technologischen Vorteilen, beispielsweise im Hinblick auf ein mögliches Recycling der eingesetzten Bauteile, bieten.

Die DE-A 199 23 625 beschreibt ein Verfahren zur Herstellung redispergierbarer Metalloxide oder Metallhydroxide mit einer volumengewichteten mittleren Kristallitgröße im Bereich von 1 bis 20 nm, die sich insbesondere für sogenannte magnetische Flüssigkeiten (Ferrofluide) eignen.

Die DE-A 199 24 138 beschreibt Klebstoffzusammensetzungen, die im Bindemittelsystem nanoskalige Teilchen mit ferromagnetischen, ferrimagnetischen, superparamagnetischen oder piezoelektrischen Eigenschaften enthalten und die sich zur Herstellung lösbarer Klebeverbindungen eignen. Dabei lassen sich die Klebeverbindungen unter Einwirkung elektromagnetischer Strahlung so hoch erwärmen, dass eine leichte Lösung (Entklebung) möglich ist.

Die WO 01/30932 beschreibt ein Verfahren zur adhäsiven Trennung von Klebeverbunden. Dabei umfasst der Klebeverbund eine thermisch erweichbare thermoplastische oder unter Erwärmung spaltbare duroplastische Klebeschicht und eine Primerschicht, wobei die Primerschicht nanoskalige Teilchen enthält, die sich durch elektromagnetische Wechseifelder erwärmen lassen.

Die WO-A 01/28771 beschreibt eine durch Mikrowellenbestrahlung härtbare Zusammensetzung, die zur Mikrowellenabsorption befähigte Partikel mit einer Curie-Temperatur, die höher ist als die Här-tungstemperatur der Zusammensetzung, enthält. Bei den zur Mikrowellenabsorption befähigten Partikeln kann es sich beispielsweise um Ferrite handeln.

Die EP-A-0 498 998 beschreibt ein Verfahren zur Mikrowellenerwärmung eines Polymermaterials auf eine vorbestimmte Temperatur, wobei das Polymermaterial dispergierte ferromagnetische Teilchen enthält, die eine Curie-Temperatur aufweisen, die der durch die Erwärmung angestrebten Temperatur entspricht. Der Teilchendurchmesser des ferromagnetischen Materials liegt dabei in einem Bereich von 1 bis 100 nm und die Curie-Temperatur in einem Bereich von 50 bis 700 °C. Bei der angestrebten Erwärmungstemperatur kann es sich beispielsweise um die Härtungs-oder Schmelztemperatur des Polymermaterials oder die zur Aktivierung einer Spaltungsreaktion erforderliche Temperatur handeln.

Die WO 01/14490 beschreibt ein Verfahren zum Verkleben von Substraten mit Schmelzklebstoffen, wobei man diese in Kombination mit einem durch Mikrowellen aktivierbaren Primer einsetzt.

Die unveröffentlichte deutsche Patentanmeldung P 100 37 883.8 beschreibt ein Verfahren zum Erwärmen eines Substrats, das metallische, magnetische, ferrimagnetische, ferromagnetische, antiferromagnetische oder superparamagnetische Partikel mit einer mittleren Teilchengröße zwischen 1 und 5000 nm enthält, wobei man das Substrat einer Mikrowellenstrahlung mit einer Frequenz im Bereich von 1 bis 300 GHz und gleichzeitig einem Gleichstrom-Magnetfeld, dessen Feldstärke mindestens doppelt so hoch ist wie die Stärke des Erdmagnetfelds, aussetzt.

Nachteilig an den zuvor genannten nanopartikulären Zusammensetzungen ist die unzureichende Ausnutzung der eingetragenen Energie. Derartige Systeme enthalten in der Regel einen hohen Gehalt dispergierter Teilchen, von denen jeweils nur ein geringer Anteil zur Absorption magnetischer, elektrischer oder elektromagnetischer Strahlung einer bestimmten eingestrahlten Frequenz befähigt ist und somit zu einer Erwärmung beiträgt. Neben den hohen Kosten für die eingesetzten nanoskaligen Teilchen, die zu einer wirtschaftlichen Benachteiligung derartiger Zusammensetzungen führen, sind mit einem hohen Gehalt an dispergierten Teilchen im Allgemeinen noch weitere Nachteile, beispielsweise bezüglich der rheologischen Eigenschaften der Systeme und der Eigenschaften der Verklebung (Versprödungsneigung), verbunden.

Der vorliegenden Erfindung liegt die Aufgabe zu Grunde, nanopartikuläre Zubereitungen zur Verfügung zu stellen, die eine bessere Ausnutzung der eingetragenen Energie ermöglichen als aus dem Stand der Technik bekannte Zubereitungen. Sie sollen sich insbesondere als oder zur Herstellung von Klebstoffzusammensetzungen eignen, deren Klebstoffeigenschaften sich durch Erwärmung modifizieren lassen.

Überraschenderweise wurde nun gefunden, dass diese Aufgabe durch eine nanopartikuläre Zubereitung gelöst wird, die in einem Dispersionsmittel wenigstens ein Metallmischoxid in Form superparamagnetischer, nanoskaliger Teilchen mit einem volumengemittelten Teilchendurchmesser im Bereich von 20 bis 100 nm enthält, das eine zweiwertige und eine dreiwertige Metallkomponente umfasst, wobei die zweiwertige Metallkomponente wenigstens zwei voneinander verschiedene zweiwertige Metalle aufweist.

Gegenstand der Erfindung ist daher eine nanopartikuläre Zubereitung, enthaltend eine kohärente Phase und wenigstens eine darin dispergierte teilchenförmige Phase superparamagnetischer, nanoskaliger Teilchen mit einem volumengemittelten Teilchendurchmesser im Bereich von 2 bis 100 nm, umfassend wenigstens ein Metallmischoxid der allgemeinen Formel $M^{II}M^{III}O_4$, worin $M^{II}$ für eine erste Metallkomponente steht, die wenigstens zwei voneinander verschiedene zweiwertige Metalle umfasst und $M^{III}$ für eine weitere Metallkomponente steht, die wenigstens ein dreiwertiges Metall umfasst, mit der Maßgabe, dass die Stöchiometrien der einzelnen Metalle so gewählt sind, dass das Mischoxid elektrisch neutral ist.

Bei den erfindungsgemäß eingesetzten Metallmischoxiden handelt es sich vorzugsweise um Doppeloxide vom Spinell-Typ. Bevorzugt werden Ferrite der Formel $M^{II}Fe_2O_4$ eingesetzt, worin $M^{II}$ für eine Metallkomponente steht, die wenigstens zwei voneinander verschiedene zweiwertige Metalle umfasst. Bevorzugt ist eines der zweiwertigen Metalle ausgewählt unter Mn, Fe, Co, Ni, Mg, Ca, Cu, Zn, Y und V, insbesondere Mn, Fe, Co und Ni. Vorzugsweise ist wenigstens ein weiteres ausgewählt unter Zn und Cd. Insbesondere enthalten die erfindungsgemäßen nanopartikulären Zubereitungen wenigstens ein Metallmischoxid, das ausgewählt ist unter Ferriten der allgemeinen Formel $(M^a_{1-x-y} M^b_x Fe_y)^{II}Fe_2^{III}O_4$ und Mischungen davon, wobei

$M^a$ ausgewählt ist unter Mn, Co, Ni, Mg, Ca, Cu, Zn, Y und V, insbesonde Mn, Co, und Ni,

$M^b$ ausgewählt ist unter Zn und Cd,

x für 0,05 bis 0,95, bevorzugt 0,1 bis 0,8, steht,

y für 0 bis 0,95 steht, und

die Summe aus x und y höchstens 1 beträgt.

$M^a$ und $M^b$ stehen für eine zweiwertige Metallkomponente. Bevorzugt werden Ferrite der allgemeinen Formel $M^a_{1-x}M^b_xFe_2O_4$ eingesetzt, wobei $M^a$ ausgewählt ist unter Mg, Ca, Mn, Co, Fe und Ni, $M^b$ ausgewählt ist unter Zn und Cd, insbesondere Zn, und wobei X mindestens 0,2 ist. Besonders bevorzugt sind ferner Ferrite der allgemeinen Formel $M^a_{1-x}Zn_xFe_2O_4$ mit X mindestens 0,2 und bevorzugt 0,2 bis 0,8, insbesondere 0,3 bis 0,5.

Nach einer weiteren besonders bevorzugten Ausführungsform enthält die erfindungsgemäße Zubereitung Ferrite der allgemeinen Formel $Mn_{1-x}M^b_xFe_2O_4$, wobei $M^b$ ausgewählt ist unter Zn und Cd, insbesondere Zn, und X = 0,2-0,5, insbesondere 0,3-0,4, ist.

Nach einer weiteren besonders bevorzugten Ausführungsform enthält die erfindungsgemäße Zubereitung Ferrite der allgemeinen Formel $Co_{1-x}M^b_xFe_2O_4$, wobei $M^b$ ausgewählt ist unter Zn und Cd, insbesondere Zn, und X = 0,2-0,8, insbesondere 0,4-0,6, ist.

Nach einer weiteren besonders bevorzugten Ausführungsform enthält die erfindungsgemäße Zubereitung Ferrite der allgemeinen Formel $Ni_{1-x}M^b_xFe_2O_4$, wobei $M^b$ ausgewählt ist unter Zn und Cd, insbesondere Zn, und X = 0,3-0,8, insbesondere 0,5-0,6, ist.

Besonders bevorzugt sind ferner Ausführungsformen, die Lithiumzinkferrite der allgemeinen Formel $Li_{1-x}Zn_{2x}Fe_{5-x}O_8$ mit X = 0-1, insbesondere mindestens 0,1 enthalten. Ein Beispiel ist $LiFe_5O_8$.

"Nanoskalige Teilchen" im Sinne der vorliegenden Anmeldung sind Teilchen mit einem volumengemittelten Teilchendurchmesser von höchstens 100 nm. Ein bevorzugter Teilchengrößenbereich beträgt 4 bis 50 nm, insbesondere 5 bis 30 nm und besonders bevorzugt 6 bis 15 nm. Derartige Teilchen zeichnen sich durch eine hohe Uniformiertheit bezüglich ihrer Größe, Größenverteilung und Morphologie aus. Die Teilchengröße wird dabei bevorzugt nach der UPA-Methode (Ultrafine Particle Analyzer) bestimmt, z. B. nach dem Laser-Streulicht-Verfahren (laserlight back scattering). Die erfindungsgemäß eingesetzten nanoskaligen Teilchen und die sie enthaltenden Zubereitungen sind zudem superparamagnetisch.

Zur Energieeintragung in die erfindungsgemäßen nanopartikulären Zubereitungen eignen sich magnetische und elektromagnetische Wechselfelder. Beim Einsatz magnetischer Wechselfelder zeichnen sich die eingesetzten superparamagnetischen Teilchen im Vergleich zu aus dem Stand der Technik bekannten paramagnetischen Teilchen dadurch aus, dass sie keine Hysterese und keine Remanenz aufweisen. Dies führt zu deutlich effektiveren Energieeintragungs- und Ervvärmungsraten der Teilchen und der sie umgebenden kohärenten Phase.

Vorteilhafterweise ermöglichen die erfindungsgemäß eingesetzten superparamagnetischen, nanoskaligen Teilchen bei einem Energieeintrag durch ein hochfrequentes magnetisches Wechselfeld eine gleichzeitige Optimierung der Curie-Temperatur und der magnetischen Relaxationszeit der Partikel. Die Curie-Temperatur ist die maximale Temperatur, auf die eine magnetische Substanz durch Einwirkung eines magnetischen oder elektromagnetischen Wechselfelds erwärmt werden kann. Sie stellt somit einen intrinsischen Überhitzungsschutz dar, da die maximal erreichbare Temperatur der nanopartikulären Zubereitung limitiert ist. Somit kann durch geeignete Auswahl der Teilchen nach der Curie-Temperatur eine übermäßige Erwärmung der kohärenten Phase wirksam vermieden werden. Die Steuerung der Curie-Temperatur gelingt durch geeignete Auswahl der Art und der jeweiligen Menge der voneinander verschiedenen zweiwertigen Metalle. So kann beispielsweise in Ferriten vom Typ $CoFe_2O_4$, $MnFe_2O_4$ oder $NiFe_2O_4$ die Curie-Temperatur mit zunehmendem Zn-Anteil herabgesetzt werden. Dabei liegen die Curie-Temperaturen der Co-Zn-Ferrite über denen der stöchiometrisch analogen Mn-Zn-Ferrite und diese wiederum über denen der stöchiometrisch analogen Ni-Zn-Ferrite. Geeignete Methoden zur Berechnung der Curie-Temperaturen einiger Ferrite sind im Folgenden bei der Abhandlung des Energieeintrags durch elektromagnetische Wechselfelder aufgeführt.

Die erfindungsgemäß eingesetzten nanoskaligen Teilchen müssen zudem eine magnetische Relaxationszeit aufweisen, die mit dem zum Energieeintrag eingesetzten magnetischen Wechselfeld korreliert. Zudem sollen die Relaxationszeiten aller eingesetzter Partikel möglichst im Wesentlichen identisch sein, um eine optimale Absorption der eingetragenen Energie zu ermöglichen. Dies wird, wie eingangs ausgeführt, erfindungsgemäß durch den Einsatz nanoskaliger Teilchen verwirklicht, die hinsichtlich ihrer Teilchengrößenverteilung und Morphologie im Wesentlichen gleichartig sind. Die Anpassung der magnetischen Relaxationszeit an das zum Energieeintrag eingesetzte magnetische Wechselfeld ($\tau = \frac{1}{2} \pi f$, $\tau$ = magnetische Relaxationszeit, f = eingestrahlte Frequenz) gelingt vorteilhafterweise wie die Steuerung der Curie-Temperatur durch geeignete Auswahl der Art und der jeweiligen Menge der voneinander verschiedenen zweiwertigen Metalle der eingesetzten Metallmischoxid-Teilchen. Die magnetische Relaxationszeit kann somit an die Frequenz technisch zur Verfügung stehender Induktoren angepasst werden, wodurch eine besonders effektive Ausnutzung der eingetragenen Energie ermöglicht wird. Dabei liegt die Frequenz geeigneter magnetischer Wechselfelder allgemein in einem Bereich von etwa 30 Hz bis 100 mHz. Geeignet sind beispielsweise Mittelfrequenzen in einem Bereich von etwa 100 Hz bis 100 kHz sowie Hochfrequenzen in einem Bereich von 10 kHz bis 60 MHz, insbesondere 50 kHz bis 3 MHz. Die Auswahl der Frequenz kann sich dabei nach den zur Verfügung stehenden Geräten richten. In einer speziellen Ausführungsform enthalten die erfindungsgemäßen nanopartikulären Zubereitungen Teilchen mit verschiedenen Relaxationszeiten $\tau_1$, $\tau_2$, etc. Somit kann eine Multifunktionalität der erfindungsgemäßen Zubereitungen erzielt werden.

Zum Eintrag von Energie kann die erfindungsgemäße nanopartikuläre Zubereitung nach einer zweiten Ausführungsform einem elektromagnetischen Wechselfeld ausgesetzt werden. Bevorzugt handelt es sich um das elektromagnetische Wechselfeld einer Mikrowellenstrahlung mit einer Frequenz im Bereich von etwa 0,3 bis 300 GHz. In einer bevorzugten Ausführung wird die Zubereitung gleichzeitig einem Gleichstrom-Magnetfeld ausgesetzt, dessen Feldstärke etwa in einem Bereich von 0,001 bis 10 Tesla liegen kann. Vorteilhafterweise ermöglichen die erfindungsgemäß eingesetzten superparamagnetischen, nanoskaligen Teilchen bei einem Energieeintrag durch ein elektromagnetisches Wechselfeld eine gleichzeitige Optimierung sowohl hinsichtlich der Curie-Temperatur als auch der Resonanzfrequenz. Hinsichtlich der Möglichkeiten zur Steuerung der Curie-Temperatur durch Auswahl der Art und Einsatzmenge der zwei voneinander verschiedenen zweiwertigen Metalle in den Metallmischoxid-Teilchen wird auf die vorherigen Ausführungen zum Energieeintrag durch magnetische Wechselfelder Bezug genommen. Es ist zudem erforderlich, die Zubereitungen für eine möglichst gute Energieausnutzung auch hinsichtlich ihrer Resonanzfrequenz zu steuern, da die einsetzbaren Mikrowellenfrequenzen behördlich vorgegeben werden.

Zunächst ermöglichen die erfindungsgemäß eingesetzten superparamagnetischen, nanoskaligen Teilchen auf Grund ihrer Einheitlichkeit bezüglich Teilchengrößenverteilung und Morphologie, dass in den Zubereitungen eine scharfe Resonanzfrequenz erreicht wird und nicht, wie bei partikulären Zubereitungen aus dem Stand der Technik, ein Ensemble von breit verteilten Frequenzen. In diesen Zubereitungen aus dem Stand der Technik sind die Mikrowellenabsorptionsfrequenzen der einzelnen Nanopartikel nie vollkommen gleich, so dass immer nur derjenige Bruchteil der dispergierten Partikel Mikrowellenenergie absorbiert, dessen Absorptionsfrequenz tatsächlich der eingestrahlten Frequenz entspricht. Alle übrigen Partikel sind inaktiv, was zu einer unzureichenden Ausnutzung der eingetragenen Energie führt. Demgegenüber weisen die erfindungsgemäßen nanopartikulären Zubereitungen einen annähernd Lorentz-artigen Zusammenhang zwischen Absorption A(B,f) und Magnetfeld B auf: $A = A_0/[(B-B_0(f))^2 + \Delta B^2]^{1/2}$. Die Mikrowellenabsorption in den erfindungsgemäßen Zubereitungen ist in deutlich höherem Maße phasenkohärent als in Zubereitungen aus dem Stand der Technik. Bei den erfindungsgemäßen Zubereitungen ist daher ein wesentlich größerer Anteil an dispergierten Teilchen in der Lage, Mikrowelleneinstrahlung einer vorgegebenen Frequenz zu absorbieren. Vorteilhafterweise zeigen die erfindungsgemäßen Zubereitungen schon allein auf Grund dieses Effekts eine deutlich verbesserte Energieausnutzung.

Zudem kann auch die Mikrowellen-Absorptionsfrequenz, wie die Curie-Temperatur, durch Auswahl der Art und Einsatzmenge der verschiedenen zweiwertigen Metalle in den Metallmischoxid-Teilchen gesteuert werden. Dies wird im Folgenden beispielhaft für Mn-Zn-Ferrite, Co-Zn-Ferrite und Ni-Zn-Ferrite erläutert.

1. $Mn_{1-x}Zn_xFe_2O_4$:

Berechnung der Curie-Temperatur $T_c$ in Abhängigkeit vom Zinkgehalt x (x = 0 bis 0,6)

$$T_c[°C] = 295 - 221\,x - 247\,x^2$$

Berechnung des Zinkgehalts x für eine Maximaltemperatur $T_0$, die bei der Mikrowellen- oder Magnetfeldbestrahlung nicht überschritten werden darf:

$$x = (1{,}394 - 0{,}00405\,T_0)^{1/2} - 0{,}447$$

$$(\text{mit } 295 \geq T_0 \geq 70)$$

linearisierte Näherung:

$$x = (295 - T_0)/375$$

Berechnung der Mikrowellen-Absorptionsfrequenz $f_{abs}$ als Funktion von x $(0 \leq x \leq 0{,}7)$:

$$f_{abs}\,(x) = \gamma[B - 16\,K(x)/9\,M(x)]$$

mit: $\gamma$ = 28 GHz/T (gyromagnetische Konstante);
B externes DC-Magnetfeld (in Tesla);

$$K = -2.800 - 2.350\,x \text{ (Kristall-Anisotropie-Energiedichte in J/m}^3),$$

$$M = 1{,}21\ 10^5 * (4{,}18 + 11{,}74\,x - 13{,}17\,x^2) \text{ (spontane Magnetisierung in A/m)}$$

2. $Co_{1+x}Zn_xFe_2O_4$:

$$\text{Curie-Temperatur } T_c[°C] = 520 - 619\,x \text{ für } x = 0 \text{ bis } 0{,}8$$

Bei gegebener Maximaltemperatur $T_0$ kann x wie folgt berechnet werden:

$$x = (520 - T_0)/619;\ (T_0 \text{ in } °C,\ 520 \geq T_0 \geq 25)$$

Die MW-Absorptionsfrequenz $f_{abs}$ berechnet sich als Funktion von x zu

$$f_{abs}(x) = \gamma[B + B_A(x)]$$

$$B_A(x) = 0{,}15 - 0{,}21\,x \text{ (in Tesla);}\ (0 \leq x \leq 0{,}7)$$

3. $Ni_{1-x}Zn_xFe_2O_4$:

$$\text{Curie-Temperatur } T_c[°C] = 590 - 547\,x - 201\,x^2 \text{ für } x = 0 \text{ bis } 0{,}7$$

Bei gegebener Maximaltemperatur $T_0$ kann x wie folgt berechnet werden:

$$x = (4{,}787 - 0{,}00498\,T_0)^{1/2} - 1{,}36;\ (T_0 \text{ in } °C,\ 590 \geq T_0 \geq 105)$$

bzw. in linearisierter Näherung $x = (590 - T_0)/693$.
Die MW-Absorptionsfrequenz $f_{abs}$ berechnet sich als Funktion von x zu

$$f_{abs}(x) = \gamma[B - 16\,K(x)/9\,M(x)]$$

$$K = -6.200 - 8.570\,x \text{ (Kristall-Anisotropie-Energiedichte in J/m}^3\text{)},$$

$$M = 1{,}21 \cdot 10^5 {}^* (2{,}24 + 9{,}15\,x - 5{,}96\,x^2) \text{ (spontane Magnetisierung in A/m)}$$

Eine zusätzliche Steuerung der Resonanzfrequenz der eingesetzten superparamagnetischen Teilchen kann durch zusätzlichen Einsatz eines Gleichstrom-Magnetfelds erfolgen. Ein Verfahren und eine Vorrichtung zur ferromagnetischen Resonanzanregung durch gleichzeitige Einwirkung von Mikrowellen und eines magnetischen Gleichfelds sind in der deutschen Patentanmeldung P 100 37 883.8 beschrieben, worauf hier in vollem Umfang Bezug genommen wird. Durch Resonanzoptimierung mit Hilfe eines Gleichstrom-Magnetfelds wird die Energieausnutzung weiter erhöht.
Die Frequenz der eingesetzten Mikrowellenstrahlung liegt vorzugsweise in einem Bereich von 500 MHz bis 25 GHz. So lassen sich beispielsweise elektromagnetische Strahlungen der sogenannten ISM-Bereiche (Industrial Scientific and Medical Application) einsetzen, bei denen die Frequenzen zwischen 100 MHz und 200 GHz liegen. Zur Verfügung stehende Frequenzen sind beispielsweise 433 MHz, 915 MHz, 2,45 GHz und 24,125 GHz sowie die sogenannten Handybänder im Bereich von 890 bis 960 MHz sowie 1.710 bis 1.880 MHz. Nähere Angaben zu elektromagnetischen Wechselfeldern im Mikrowellenbereich sind bei Kirk Othmer, "Encyclopedia of Chemical Technology", 3. Auflage, Band 15, Kapitel "Microwave Technology" beschrieben, worauf hier Bezug genommen wird.
Nach einer speziellen Ausführungsform enthalten die erfindungsgemäßen nanopartikulären Zubereitungen ein multifunktionales Partikelsystem. Diese enthalten zwei oder mehrere verschiedene Teilchenarten, die bei unterschiedlichen Frequenzen ihr Absorptionsmaximum haben. Geeignet sind z. B. Partikelsysteme, bei denen eine Komponente bei 2,45 GHz und eine andere bei 900 MHz absorbiert. Zur Erzielung einer möglichst selektiven Absorption nur einer Teilchenart eines multifunktionalen Partikelsystems kann die zuvor beschriebene Steuerung der Resonanzfrequenz über Art und Einsatzmenge der verschiedenen zweiwertigen Metalle und/oder ein Gleichstrom-Magnetfeld eingesetzt werden.
Verfahren zur Herstellung superparamagnetischer nanoskaliger Teilchen sind prinzipiell bekannt. Sie basieren beispielsweise auf einer Ausfällung aus wässrigen Lösungen von Metallsalzen durch Anheben oder Absenken des pH-Werts mit einer geeigneten Base bzw. Säure. Die DE-A-196 14 136 beschreibt ein Verfahren zur Herstellung agglomeratfreier nanoskaliger Teilchen am Beispiel von Eisenoxidteilchen. Die DE-A-199 23 625 beschreibt ein Verfahren zur Herstellung nanoskaliger redispergierbarer Metalloxide und - hydroxide. Auf die Offenbarung dieser Dokumente wird hier in vollem Umfang Bezug genommen. Ein geeignetes Verfahren zur Herstellung erfindungsgemäß einsetzbarer superparamagnetischer nanoskaliger Teilchen besteht in der Fällung aus sauren wässrigen Metallsalzlösungen durch Zugabe einer Base. Dazu können beispielsweise gegebenenfalls erwärmte, wässrige salzsaure Lösungen von Metallchloriden zur Fällung mit einer geeigneten Menge einer erwärmten Base versetzt werden. Es hat sich als vorteilhaft erwiesen, bei der Ausfällung der Partikel einen bestimmten Temperaturbereich einzuhalten, um Teilchen mit der gewünscht hohen Magnetfeld- bzw. Mikrowellenabsorptionsfähigkeit zu erreichen. Vorzugsweise liegt die Temperatur bei der alkalischen Fällung in einem Bereich von 20 bis 100 °C, besonders bevorzugt 25 bis 95 °C und insbesondere 60 bis 90 °C.

Um eine Agglomeration oder Zusammenwachsen der nanoskaligen Teilchen im Wesentlichen zu verhindern und/oder um eine gute Dispergierbarkeit der teilchenförmigen Phase in der kohärenten Phase der erfindungsgemäßen Zubereitungen zu gewährleisten, sind die eingesetzten Teilchen oberflächenmodifiziert bzw. oberflächenbeschichtet. Die Teilchen weisen auf zumindest einem Teil ihrer Oberfläche eine ein- oder mehrlagige Beschichtung auf, die wenigstens eine Verbindung mit ionogenen, ionischen und/oder nichtionischen oberflächenaktiven Gruppen enthält. Die Verbindungen mit oberflächenaktiven Gruppen sind vorzugsweise ausgewählt unter den Salzen starker anorganischer Säuren, z. B. Nitraten und Perchloraten, gesättigten und ungesättigten Fettsäuren, wie Palmitinsäure, Margarinsäure, Stearinsäure, Isostearinsäure, Nonadecansäure, Lignocerinsäure, Palmitoleinsäure, Oleinsäure, Linolsäure, Linolensäure und Elaosterinsäure, quatemären Ammoniumverbindungen, wie Tetraalkylammoniumhydroxiden, z. B. Tetramethylammoniumhydroxid, Silanen, wie Alkyltrialkoxysilanen und Mischungen davon. Die DE-A-197 26 282 beschreibt die Oberflächenmodifizierung nanoskaliger Teilchen mit mindestens zwei das Teilchen umgebenden Schalen. Die WO 97/38058 beschreibt die Herstellung von mit Silanen oberflächig modifizierten nanoskaligen Teilchen. Auf die genannten Dokumente wird in vollem Umfang Bezug genommen.

Der Anteil an Oberflächenmodifikator beträgt im Allgemeinen 1 bis 50 Gew.-%, vorzugsweise 2 bis 40 Gew.-% und speziell 10 bis 30 Gew.-%, bezogen auf das Gewicht der eingesetzten Teilchen.

Die kohärente Phase der erfindungsgemäßen nanopartikulären Zubereitungen ist vorzugsweise ausgewählt unter Wasser, organischen Lösungsmitteln, polymerisierbaren Monomeren, Polymeren und Mischungen davon.

Geeignete organische Dispersionsmittel sind beispielsweise ausgewählt unter Ölen, Fetten, Wachsen, Estern von $C_6$-$C_{30}$-Monocarbonsäuren mit ein-, zwei- oder dreiwertigen Alkoholen, gesättigten acyclischen und cyclischen Kohlenwasserstoffen, Fettsäuren, niedermolekularen Alkoholen, Fettalkoholen und Mischungen davon. Dazu zählen beispielsweise Paraffin und Paraffinöte, Mineralöle, lineare gesättigte Kohlenwasserstoffe mit in der Regel mehr als 8 Kohlenstoffatomen, wie Tetradecan, Hexadecan, Octadecan etc., cyclische Kohlenwasserstoffe, wie Cyclohexan und Decahydronaphthalin, Wachse, Ester von Fettsäuren, Siliconöle etc. Bevorzugt sind z. B. lineare und cyclische Kohlenwasserstoffe und Alkohole.

Als kohärente Phase geeignete polymerisierbare Monomere und Polymere werden im Folgenden bei den Klebstoffzusammensetzungen genannt.

Vorteilhafterweise lassen sich die erfindungsgemäßen nanopartikulären Zubereitungen nahezu als Primärpartikel dispergieren und bilden somit äußerst stabile Dispersionen. Die rheologischen Eigenschaften lassen sich vorteilhafterweise in Abhängigkeit von Art und Menge des Dispersionsmittels in einem . weiten Bereich einstellen. Somit lassen sich je nach gewünschter Anwendungsform Zubereitungen herstellen, die eine flüssige bis gelförmige Konsistenz aufweisen. "Gelförmige Konsistenz" zeigen Mittel, die eine höhere Viskosität als Flüssigkeiten aufweisen, und die selbsttragend sind, d. h. die eine ihnen verliehene Form ohne formstabilisierende Umhüllung behalten. Die Viskosität derartiger Zubereitungen liegt beispielsweise in einem Bereich von etwa 1 bis 60000 mPas.

Die erfindungsgemäßen Zubereitungen auf Basis flüssiger Dispersionsmittel sind in der Regel redispergierbar, d. h. die dispergierten Teilchen können durch Trocknen der Zubereitung zurückgewonnen und anschließend wieder dispergiert werden, im Wesentlichen ohne dass sich die Dispersionsfähigkeit und die Absorptionsfähigkeit gegenüber magnetischen und elektromagnetischen Wechselfeldern verschlechtert.

Der Anteil der nanoskaligen Teilchen beträgt vorzugsweise 1 bis 70 Gew.-%, insbesondere 2 bis 35 Gew.-% und speziell 3 bis 10 Gew.-%, bezogen auf das Gesamtgewicht der nanopartikulären Zubereitung. Auf Grund der sehr guten Befähigung der erfindungsgemäßen Zubereitungen zur Energieaufnahme durch Absorption magnetischer oder elektromagnetischer Wechselfelder lässt sich der zur Aufnahme einer bestimmten Energiemenge erforderliche Anteil an dispergierten Teilchen gegenüber partikulären Zubereitungen aus dem Stand der Technik deutlich absenken.

In einer bevorzugten Ausführungsform handelt es sich bei der erfindungsgemäßen Zubereitung um eine Klebstoffzusammensetzung. Die kohärente Phase von Klebstoffzusammensetzungen umfasst wenigstens ein für den Einsatz in Klebstoffen geeignetes Polymer und/oder wenigstens ein polymerisierbares Monomer.

Als kohärente Phase (Bindemittelmatrix) für die Klebstoffe können im Prinzip alle für Klebstoffe geeignete Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol bzw. Styrol-Butadien-Styrolcopolymere, thermoplastische Elastomere, amorphe Polyolefine, lineare, thermoplastische Polyurethane, Copolyester, Polyamidharze, Polyamid/EVA-Copolymere, Polyaminoamide auf Basis von Dimerfettsäuren, Polyesteramide oder Polyetheramide. Weiterhin eignen sich prinzipiell die bekannten Reaktionsklebstoffe auf der Basis ein- bzw. zweikomponentiger Polyurethane, ein- oder zweikomponentiger Polyepoxide, Siliconpolymere (ein- bzw. zweikomponentig), silanmodifizierte Polymere, wie sie beispielsweise bei G. Habenicht, "Kleben: Grundlagen, Technologie, Anwendungen", 3. Auflage, 1997 im Kapitel 2.3.4.4 beschrieben werden. Die (Meth)acrylat-funktionellen Reaktionskleber auf der Basis peroxidischer Härter, anaerober Härtungsmechanismen, aerober Härtungsmechanismen oder UV-Härtungsmechanismen eignen sich ebenfalls als Klebstoffmatrix. Konkrete Beispiele für den Einbau thermisch labiler Gruppen in Reaktionsklebstoffe zum Ziel der späteren Spaltung dieser Bindungen sind die Klebstoffe gemäß WO 99/07774, bei denen zumindest eine Aufbaukomponente Di- oder Polysulfidbindungen enthält. In einer besonders bevorzugten Ausführungsform können diese Klebstoffe noch feste Spaltungsreagenzien in kristalliner, verkapselter, chemisch blockierter, topologisch oder sterisch inaktivierter oder kinetisch gehemmter, fein dispergierter Form enthalten, wie sie in der noch unveröffentlichten DE-A-199 04 835 auf den Seiten 14 bis 16 offenbart werden. Eine andere Möglichkeit ist die Verwendung von Polyurethanklebstoffen, die als Spaltungsagenz die in der DE-A-198 32 629 offenbarten aminischen Derivate enthalten. Die in den beiden vorgenannten Schriften offenbarten Spaltungsagenzien sind ausdrücklich Bestandteil der vorliegenden Erfindung.

Die kohärente Phase thermisch aktivierbarer chemisch reagierender Klebstoffe enthält im Allgemeinen eine oder mehrere Komponenten, die einer Polyreaktion zugängig sind. Dazu zählen beispielsweise Klebstoffe, die Polyisocyanate mit verkappten thermisch aktivierbaren Isocyanatgruppen und eine Komponente mit gegenüber Isocyanatgruppen reaktiven Gruppen, wie z. B. ein Polyol, enthalten.

Ein weiterer Gegenstand der Erfindung ist ein Verfahren zum Erwärmen einer Zubereitung, wie zuvor definiert, bei dem man die Zubereitung einem magnetischen oder elektromagnetischen Wechselfeld aussetzt.

Wie zuvor erwähnt, lassen sich bei einer Erwärmung durch magnetische Wechseifelder sowohl die maximal erreichbare Temperatur über die Curie-Temperatur als auch die magnetische Relaxationszeit gleichzeitig regeln. Vorzugsweise wird die Zubereitung zur Erwärmung einem magnetischen Wechselfeld mit einer Frequenz im Bereich von 30 Hz bis 100 MHz ausgesetzt. Geeignet sind die Frequenzen gebräuchlicher Induktoren, beispielsweise Mittelfrequenzen in einem Bereich von 100 Hz bis 100 kHz oder Hochfrequenzen in einem Bereich von 10 kHz bis 60 MHz, insbesondere 50 kHz bis 3 MHz. Wie ebenfalls zuvor erwähnt, ermöglichen die erfindungsgemäßen nanopartikulären Zubereitungen eine Ausnutzung des Energieeintrags zur Verfügung stehender elektromagnetischer Strahlung in besonders effektiver Weise. Analoges gilt für eine Erwärmung durch elektromagnetische Wechselfelder einer Mikrowellenstrahlung. Vorzugsweise wird dabei Mikrowellenstrahlung mit einer Frequenz im Bereich von 0,3 bis 300 GHz eingesetzt. Geeignet sind alle zuvor genannten behördlich freigegebenen Mikrowellenfrequenzen wie die erwähnten ISM-Frequenzen, die in einem Bereich von 100 MHz bis etwa 200 GHz liegen. Es war bereits darauf hingewiesen worden, dass beim Einsatz elektromagnetischer Wechselfelder zur Erwärmung sowohl die maximal erreichbare Temperatur über die Curie-Temperatur als auch die ferromagnetische Resonanzfrequenz gleichzeitig regelbar sind. Zur Einstellung der Resonanzfrequenz wird vorzugsweise zusätzlich zur Mikrowellenstrahlung ein Gleichstrom-Magnetfeld mit einer Feldstärke im Bereich von etwa 0,001 bis 10 Tesla eingesetzt. Vorzugsweise liegt die Feldstärke in einem Bereich von 0,015 bis 0,045 Tesla und insbesondere 0,02 bis 0,06 Tesla. Auch bei einer Erwärmung der Zubereitung durch elektromagnetische Wechselfelder kommt es aus den zuvor genannten Gründen zu einer besonders effektiven Ausnutzung der eingetragenen Energie.

Die Wechselfeld-induzierte Erwärmung von Klebstoffzusammensetzungen nach dem erfindungsgemäßen Verfahren erfolgt mit dem Ziel einer Modifizierung der Klebeeigenschaften. Dabei können zwei grundsätzliche Ausführungsformen mit jeweils verschiedenen Varianten unterschieden werden. Zum einen kann zur Erwärmung eine Klebstoffzusammensetzung eingesetzt werden, deren kohärente Phase wenigstens ein thermisch härtbares Polymer und/oder wenigstens ein thermisch polymerisierbares Monomer umfasst, wobei die Klebstoffzusammensetzung in Folge der hervorgerufenen Erwärmung aushärtet. Zum anderen kann zur Erwärmung eine Klebstoffzusammensetzung eingesetzt werden, deren kohärente Phase einen ausgehärteten (abgebundenen) Klebstoff umfasst, wobei die Verklebung in Folge der hervorgerufenen Erwärmung gelöst werden kann.

Ein weiterer Gegenstand der Erfindung ist somit zum einen ein Verfahren zur Herstellung einer Klebeverbindung zwischen zwei Substratoberflächen, bei dem man

i) auf wenigstens einen Teil der Oberfläche mindestens eines der Substrate eine Zubereitung, wie zuvor definiert, aufträgt, deren kohärente Phase wenigstens ein polymerisierbares Monomer und/oder wenigstens ein thermisch härtbares Polymer umfasst,

ii) die Substratoberflächen im Bereich der aufgetragenen Zubereitung miteinander in Kontakt bringt, und

iii) die Substrate im Bereich der aufgetragenen Zubereitung zur Erwärmung einem magnetischen oder elektromagnetischen Wechselfeld aussetzt.

Das Herstellen einer Klebeverbindung durch gezielte Erwärmung einer Klebstoffzusammensetzung (bond-on-command) mittels Eintragung von Energie in Form von magnetischen oder elektromagnetischen Wechselfeldern kann beispielsweise durch eine chemische Reaktion zwischen geeigneten funktionellen Gruppen der Klebstoffzusammensetzung erfolgen, wie zuvor beschrieben.

Des Weiteren kann sie auch durch Freisetzen einer die Härtung auslösenden Komponente, z. B. eines Monomeren und/oder Katalysators, ausgelöst werden. Dazu können die die Härtung auslösenden Komponenten beispielsweise in Form von Mikrokapseln, die zusätzlich superparamagnetische, nanoskalige Teilchen enthalten, in der Klebstoffzusammensetzung dispergiert werden. Durch Bestrahlung mit einer geeignete Frequenz kann eine gewünschtenfalls auf die Mikrokapseln beschränkte Erwärmung hervorgerufen werden, die zu einer Öffnung der Mikrokapseln und Freisetzung der enthaltenen Komponenten führt. Nach diesem Verfahren ist eine Härtung der Klebstoffzusammensetzung mit sehr geringem Energieeinsatz möglich, da nicht die gesamte Klebstoffzusammensetzung erwärmt werden muss.

Nach einer weiteren geeigneten Verfahrensvariante wird zur Herstellung einer Klebeverbindung ein Klebstoffsystem eingesetzt, das einen mit magnetischen oder elektromagnetischen Wechselfeldern aktivierbaren Primer auf Basis einer erfindungsgemäßen nanopartikulären Zubereitung sowie einen herkömmlichen Klebstoff, insbesondere einen Schmelzklebstoff, umfasst. Nach diesem Verfahren wird das Klebstoffsystem über eine lokale Erwärmung der Primerschicht selektiv aktiviert. Derartige Verfahren eignen sich insbesondere zum Verkleben von thermisch wenig belastbaren Substraten.

Ein weiterer Gegenstand der Erfindung ist ein Verfahren zum Lösen einer Klebeverbindung, enthaltend eine Zubereitung, wie zuvor definiert, wobei man diese zur Erwärmung einem magnetischen oder elektromagnetischen Wechselfeld aussetzt und sich die Klebeverbindung bei thermoplastischen Klebeverbindungen über den Erweichungspunkt erwärmt, bei duroplastischen Klebeverbindungen auf eine Temperatur, die eine Rückspaltung bewirkt, so dass, gegebenenfalls unter mechanischer Belastung, die verklebten Substrate voneinander getrennt werden können.

Das Lösen einer Klebeverbindung durch gezielte Erwärmung einer Klebstoff zusammensetzung (disbond-on-command) mittels Eintragung von Energie in Form von magnetischen oder elektromagnetischen Wechselfeldern kann beispielsweise auf einer reversiblen oder irreversiblen Erweichung der Klebeverbindung beruhen. Beispielsweise kann es sich bei dem eingesetzten Klebstoff um einen Schmelzklebstoff handeln, der in Folge der durch die Einwirkung der magnetischen oder elektromagnetischen Strahlung hervorgerufenen Erwärmung reversibel erweicht. Dieses reversible Erweichen kann dann sowohl zur gezielten Herstellung als auch zum gezielten Lösen einer Klebeverbindung eingesetzt werden.

In einer weiteren Ausführungsform enthält der abgebundene Klebstoff thermisch labile Bindungen, die in Folge der hervorgerufenen Erwärmung gespalten werden. Das Lösen der Klebeverbindung kann bei derartigen Klebstoffen ohne Einwirkung von Chemikalien und unter Bedingungen erfolgen, unter denen die zusammengefügten Substrate nicht nennenswert erwärmt und somit thermisch geschädigt werden.

In einer weiteren Ausführungsform enthält die Klebstoffzusammensetzung Spaltungsreagenzien in thermisch aktivierbarer, beispielsweise in verkapselter, kristalliner, chemisch blockierter, topologisch oder sterisch inaktivierter oder kinetisch gehemmter Form eindispergiert. Dabei liegen die die Spaltung auslösenden Komponenten beispielsweise in Form von Mikrokapseln vor, die zusätzlich superparamagnetische, nanoskalige Teilchen aufweisen und in der Klebstoffzusammensetzung dispergiert werden. Durch Bestrahlung mit magnetischen oder elektromagnetischen Wechselfeldern geeigneter Frequenz können diese Mikrokapseln thermisch geöffnet und somit die Spaltung der Klebstoffzubereitung bewirkt werden. Auch hier kann die Erwärmung auf eben diese Kapseln beschränkt werden, so dass der benötigte Energieeinsatz ver glichen mit einer homogenen Verteilung in der gesamten Zusammensetzung stark verringert werden kann.

Wie bei dem zuvor beschriebenen Verfahren zur Herstellung einer Klebeverbindung kann auch bei dem Verfahren zum Lösen einer Klebeverbindung eine Klebstoffzusammensetzung eingesetzt werden, die wenigstens einen mit magnetischen oder elektromagnetischen Wechselfeldern aktivierbaren Primer in Kombination mit wenigstens einem Klebstoff umfasst.

Die erfindungsgemäßen Zubereitungen können in vorteilhafter Weise multifunktional modifiziert werden. Derartige multifunktionale Zubereitungen enthalten wenigstens zwei verschiedene Sorten superparamagnetischer, nanoskaliger Teilchen, die sich beispielsweise in ihren magnetischen Relaxationszeiten oder in ihrer magnetischen Resonanzfrequenz so stark unterscheiden, dass sie individuell erwärmbar sind. Denkbar ist auch eine Anregung der einen Teilchensorte durch ein magnetisches und der anderen durch eine elektromagnetisches Wechselfeld. Multifunktionale Zubereitungen eignen sich für eine Vielzahl individueller Anwendungen. Dazu zählen beispielsweise Zubereitungen, die jeweils in mikroverkapselter Form wenigstens ein die Härtung und wenigstens ein die Spaltung auslösendes Agenz jeweils in Kombination mit unterschiedlich aktivierbaren Teilchen enthalten.

Die Erfindung wird anhand der folgenden nicht einschränkenden Beispiele näher erläutert.

Beispiele

I. Synthese vom nanoskaligen Ferriten mit wenigstens zwei verschiedenen zweiwertigen Metallen

Beispiel 1:

Synthese eines mit Zn dotierten nano-Cobaltferrits ($Co_{0,7}Zn_{0,3}Fe_2O_4$)

27,03 g $FeCl_3 \cdot 6\ H_2O$ werden in 100 ml entmineralisiertem Wasser gelöst und gerührt. 8,33 g $CoCl_2 \cdot 6\ H_2O$ werden in 35 ml Wasser gelöst und mit 1,5 ml HCl konz. versetzt und gerührt. 2,04 g $ZnCl_2$ werden in 15 ml Wasser gelöst und mit 1,5 ml HCl konz. (37%ig) versetzt und gerührt. Kurz vor der Fällung werden alle Lösungen auf 85 °C erwärmt und vereinigt. 48 g NaOH werden mit 0,6 1 Wasser vermischt und zum Sieden gebracht. Zur kochenden Base werden die vereinigten Metallsalzlösungen gegeben, und es wird eine halbe Stunde in der Siedehitze gerührt.
Nach dem Abkühlen und der Sedimentation über einem Permanentmagneten wird viermal mit je 250 ml destilliertem Wasser gewaschen und über Nacht stehen gelassen. Das Pulver wird bei 45 °C im Vakuumtrockenschrank von Wasser befreit.

Beispiel 2:

Darstellung eines mit Zink dotierten nano-Nickel-Ferrits ($Fe_{0,285}Ni_{0,285}Zn_{0,43}$)$Fe_2O_4$, hydrothermale Nachbehandlung

10,81 g $FeCl_3 \cdot 6\ H_2O$ werden in 40 ml entmineralisiertem $H_2O$ gelöst und auf 80 °C erhitzt. 1,35 g $NiCl_2 \cdot 6\ H_2O$ und 1,17 g $ZnCl_2$ werden in einem Gemisch aus 8 ml $H_2O$ und 1 ml 37%iger HCl gelöst und ebenfalls auf 80 °C erhitzt. Dazu werden 1,13 g $FeCl_2 \cdot 4\ H_2O$ gegeben und aufgelöst. Die beiden Metallsalzlösungen werden vereinigt und anschließend schnell und unter starkem Rühren in eine auf 80 °C erhitzte Lösung von 16 g NaOH in 400 ml $H_2O$ gegeben. Es wird etwa 15 min. bei 80 °C gerührt. Der entstandene Niederschlag wird mehrfach mit Wasser gewaschen und anschließend dialysiert, bis eine Leitfähigkeit von 70 µS im Dialyseschlauch erreicht ist. Eine Hälfte des Produkts wird zentrifugiert und mit 2-Propanol wieder aufgenommen. Dieser Vorgang wird dreimal wiederholt. Die entstehende Paste wird anschließend in 2-Propanol aufgeschwemmt und die Mischung in einen Teflonbecher gegeben, der bis zu einem Füllvolumen von 160 ml aufgefüllt wird. In einer Druckaufschlussapparatur (Berghof) wird die Mischung 24 h bei 220 °C erhitzt (Aufheizrate 110 °C/h) und anschließend getrocknet.

II. Anwendungstechnische Eigenschaften

Beispiel 3:

Vergleich der Mikrowellen-Absorption einer erfindungsgemäßen nanopartikulären Dispersion mit einer Magnetit-Dispersion in Abhängigkeit von einem angelegten Gleichstrom-Magnetfetd

Die Figuren 1 (erfindungsgemäß) und 2 (Stand der Technik) zeigen die Mikrowellen-Absorptionen an jeweils 3%igen Dispersionen in Decan. In Figur 1 wurde ein Ni-Zn-Ferrit ($Ni_{0,4}Zn_{0,6}Fe_2O_4$) mit einem mittleren Teilchendurchmesser von 8 mm und mit einer Oberflächenbeschichtung aus Ölsäure und in Figur 2 Magnetit ($Fe_3O_4$) mit einem mittleren Teilchendurchmesser von 10 mm und mit einer Oberflächenbeschichtung aus Isostearinsäure eingesetzt. Die Mikrowellenfrequenz betrug in beiden Fällen 1,415 GHz.
Zur Durchführung der gezeigten Messungen wurden je etwa 200 mg Lösung (entsprechend 6 mg Ferrit) in einem Kunststoffnapf auf einen Mikrostrip-Wellenleiter gestellt, der Mikrowellen der Frequenz f = 1,415 GHz führte. Gemessen wurde die prozentuale Veränderung des Mikrowellen-Pegels an dieser Leitung als Funktion der magnetischen Feldstärke (B = 0 bis 65 mT), welcher der Probe durch einen zusätzlichen Elektromagneten zugeführt wurde. Die Einstellungen des Instruments waren bei beiden Messungen vollkommen gleich.
Figur 1 zeigt für die erfindungsgemäße Dispersion ein scharf ausgeprägtes Minimum des Mikrowellen-Signals bei B = 23 +/- 3 mT sowie ein zweites, weniger stark ausgeprägtes Minimum bei B = 45 +/- 5 mT. Die Pegelabschwächung beträgt im ersten Minimum ca. 7 %.
Figur 2 zeigt für die Vergleichsdispersion ein Minimum bei 15 +/- 7 mT. Die Pegelabschwächung liegt hier bei nur etwa 1 %. Die Mikrowellen-Absorption an der Magnetit-Dispersion in Figur 2 entspricht weitgehend der Absorptionsfähigkeit handelsüblicher Ferrofluide, die auf Magnetit-Basis hergestellt werden, z. B. denen der APG-Reihe von Ferrofluidics. Die Erhöhung der Absorption bei den erfindungsgemäßen Ni-Zn-Ferriten auf das etwa 7-fache gegenüber dem Stand der Technik bedeutet eine starke Leistungssteigerung des in der P 100 37 883.8 beschriebenen Verfahrens zur elektromagnetischen Resonanzanregung und bei dessen Einsatz zur Erwärmung teilchengefüllter Substrate.

Beispiel 4:

Vergleich der Dispergierbarkeit

Figur 3 (erfindungsgemäß) zeigt die durch Lichtstreuung bestimmte Größenverteilung der dispergierten Nanopartikel aus verschiedenen Ni-Zn-Ferriten, deren Oberfläche mit Ölsäure modifiziert ist. Die Größe der modifizierten Partikel in der Dispersion liegt bei 15 - 20 nm und ist somit nur wenig größer als der Durchmesser der zur Dispergierung eingesetzten Ferritpartikel, der in allen Fällen etwa bei 8 nm lag. Dies belegt, dass sich die nanoskaligen Ni-Zn-Ferrit-Partikel in der Dispersion sehr gleichmäßig verteilen und somit die rheologischen Eigenschaften des als kohärente Phase eingesetzten Lösungsmittels bzw. Polymers im Wesentlichen nicht beeinträchtigt werden.

Demgegenüber zeigt Figur 4 (Stand der Technik) eine unter den gleichen Bedingungen hergestellte Dispersion von nanokristallinem Magnetit. Die Größe der dispergierten Partikel liegt bei ca. 30 - 40 nm, was auf eine teilweise Agglomeration der Partikel hindeutet.

Beispiel 4:

Abhängigkeit der Curie-Temperaturen von Co-, Mn- und Ni-Zn-Ferriten in Abhängigkeit vom Zinkgehalt

a) $Co_{1-x}Zn_xFe_2O_4$

| Zn-Gehalt x | T(Curie) [°C] |
|---|---|
| 0 | 520 |
| 0,1 | 460 |
| 0,2 | 389 |
| 0,3 | 331 |
| 0,4 | 275 |
| 0,6 | 137 |
| 0,7 | 82 |
| 0,8 | 25 |

b) $Mn_{1-x}Zn_xFe_2O_4$

| Zn-Gehalt x | T(Curie) [°C] |
|---|---|
| 0 | 295 |
| 0,1 | 266 |
| 0,2 | 240 |
| 0,28 | 218 |
| 0,4 | 164 |
| 0,48 | 136 |
| 0,6 | 70 |

c) $Ni_{1-x}Zn_xFe_2O_4$

| Zn-Gehalt x | T(Curie) [°C] |
|---|---|
| 0 | 590 |
| 0,1 | 541 |
| 0,2 | 482 |
| 0,3 | 398 |
| 0,4 | 345 |
| 0,5 | 275 |
| 0,6 | 207 |
| 0,7 | 105 |

Beispiel 6:

Aufheizen von mit Zn dotierten nano-Cobaltferriten ($Co_{1-x}Zn_xFe_2O_4$) und nano-Manganferriten ($Mn_{1-x}Zn_xFe_2O_4$) in einem hochfrequenten magnetischen Wechselfeld

Die Herstellung von mit nanoskaligen Teilchen gefüllten Klebstoffen ist an den Teilchen aus Beispiel 1 verdeutlicht:

In einem Probenglas werden 1,1404 g eines Schmelzklebstoffs auf Polyamidbasis (Macromelt® 6208, Fa. Teroson) aufgeschmolzen, mit 0,0603 g des nano-$Co_{0,7}Zn_{0,3}Fe_2O_4$ aus Beispiel 1 versetzt und unter weiterem Erwärmen mit einem Glasstab bis zur Homogenität verrührt. Es wird ein Komposit mit einem Anteil nanopartikulärer Teilchen von 5 Gew.-% erhalten. Die Herstellung der übrigen Komposite aus der folgenden Tabelle erfolgte analog. Zur Erzeugung des magnetischen Wechselfelds wurde ein Gerät der Fa. Hüttinger (TIG 5/300) mit einer Normalspule SPI-015-040 eingesetzt.

Tabelle 1: Zeitabhängige Aufheizung von Kompositen aus Macromelt® 6208 und 5 Gew.-% $Co_{1-x}Zn_xFe_2O_4$

| t/s | x=0,0 | x=0,1 | x=0.2 | x=0,4 | x=0,7 | x=1,0 |
|---|---|---|---|---|---|---|
| 0 | 0 | 0 | 0 | 0 | 0 | 0 |
| 10 | 12 | 32 | 45 | 35 | 0 | 0 |
| 20 | 24 | 77 | 90 | 53 | 5 | 0 |
| 30 | 42 | 119 | 101 | 61 | 8 | -2 |
| 45 | 82 | 146 | 116 | 72 | 9 | 2 |
| 60 | 145 | 157 | 128 | 80 | 12 | 0 |
| 90 | 172 | 166 | 136 | 83 | 15 | -1 |
| 120 | 189 | 174 | 139 | 91 | 19 | 4 |
| 240 | 207 | 187 | 148 | 98 | 23 | 3 |
| 360 | 231 | 189 | 149 | 102 | 27 | 4 |

Tabelle 2: Zeitabhängige Aufheizkurven von Kompositen aus Macromelt® 6208 und 5 Gew.-% $Mn_{1-x}Zn_xFe_2O_4$

| t/s | x=0,0 | x=0,1 | x=0,2 | x=0,3 | x=0,4 | x=0,5 |
|---|---|---|---|---|---|---|
| 0 | 18 | 18 | 18 | 18 | 18 | 18 |
| 10 | 85 | 71 | 62 | 47 | 38 | 28 |
| 20 | 129 | 103 | 79 | 65 | 52 | 37 |
| 30 | 158 | 138 | 106 | 78 | 64 | 42 |
| 45 | 198 | 155 | 118 | 92 | 75 | 49 |
| 60 | 211 | 164 | 130 | 97 | 83 | 56 |
| 90 | 220 | 177 | 144 | 115 | 96 | 62 |
| 120 | 222 | 185 | 162 | 125 | 101 | 67 |
| 240 | 238 | 201 | 182 | 143 | 116 | 78 |
| 360 |  | 203 | 184 | 145 | 127 | 84 |

Beispiel 6 belegt, dass die Energieabsorption der erfindungsgemäßen Klebstoffkomposite bei einer bestimmten, durch die zweiwertigen Metalle der eingesetzten nanoskaligen Teilchen einstellbaren Endtemperatur abgeschaltet wird, die mit der Curie-Temperatur eng korreliert ist.

Figur 5 zeigt die intrinsische Temperaturbegrenzung beim Aufheizen von $Co_{1-x}Zn_xFe_2O_4$ im magnetischen HF-Feld durch Ausnutzung der Curie-Temperatur.

Beispiel 7:

Mikrowellen-Erwärmung von $Ni_{1-x}Zn_xFe_2O_4$

An Kompositen aus einem handelsüblichen Heißkleber (Pattex® hot, Fa. Henkel KGaA) mit 15 Gew.% Teilchengehalt wurde die Erwärmung durch Mikrowellen (400 W, 20 s) in Abhängigkeit vom Zinkgehalt bestimmt. Die Ergebnisse sind in der folgenden Tabelle 3 wiedergegeben.

Tabelle 3: Zeitabhängige Aufheizkurven von Kompositen aus Pattex® hot und 15 Gew.-% $Ni_{1-x}Zn_xFe_2O_4$
Mikrowellen-Aufheizung

| Zeit/s | | x = 0,0 | x = 0,3 | x = 0,7 |
|---|---|---|---|---|
| | 0 | 25 | 25 | 25 |
| | 20 | 109 | 57 | 48 |
| | 30 | 152 | 65 | 60 |
| | 40 | 179 | 84 | 69 |
| | 50 | 205 | 99 | 70 |
| | 60 | 215 | 119 | 69 |
| | 70 | 214 | 125 | 68 |
| | 80 | 216 | 129 | 71 |
| | 90 | 217 | 128 | 70 |
| | 100 | 216 | 127 | 71 |
| | 110 | 215 | 127 | 72 |
| | 120 | 216 | 128 | 73 |

Beispiel 7 belegt, dass die Energieabsorption der erfindungsgemäßen Klebstoffkomposite auch bei Mikrowellenbestrahlung bei einer bestimmten, durch die Art und Menge der zweiwertigen Metalle der eingesetzten nanoskaligen Teilchen einstellbaren Endtemperatur abgeschaltet wird, die mit der Curie-Temperatur eng korreliert ist.

**Patentansprüche**

1.　Nanopartikuläre Zubereitung, enthaltend eine kohärente Phase und wenigstens eine darin dispergierte teilchenförmige Phase superparamagnetischer, nanoskaliger Teilchen mit einem volumengemittelten Teilchendurchmesser im Bereich von 2 bis 100 nm, umfassend wenigstens ein Metallmischoxid der allgemeinen Formel $M^{II}M^{III}O_4$, worin $M^{II}$ für eine erste Metallkomponente steht, die wenigstens zwei voneinander verschiedene zweiwertige Metalle umfasst und $M^{III}$ für eine weitere Metallkomponente steht, die wenigstens ein dreiwertiges Metall umfasst, mit der Maßgabe, dass die Stöchiometrien der einzelnen Metalle so gewählt sind, dass das Mischoxid elektrisch neutral ist, **dadurch gekennzeichnet, dass** die Teilchen auf zumindest einem Teil ihrer. Oberfläche eine ein- oder mehrlagige Beschichtung aufweisen, enthaltend wenigstens eine Verbindung mit ionogenen, ionischen und/oder nichtionischen oberflächenaktiven Gruppen.

2.　Zubereitung nach Anspruch 1, wobei das Mischoxid ausgewählt ist unter Ferriten der allgemeinen Formel $(M^a{}_{1-x-y}M^b{}_xFe_y)^{II}Fe_2{}^{III}O_4$ und Mischungen davon, wobei
$M^a$ ausgewählt ist unter Mn, Co, Ni,, Mg, Ca, Cu, Zn, Y und V,
$M^b$ ausgewählt ist unter Zn und Cd,
x für 0,05 bis 0,95, bevorzugt 0,1 bis 0,8, steht,
y für 0 bis 0,95 steht, und
die Summe aus x und y höchstens 1 beträgt.

3.　Zubereitung nach Anspruch 2, wobei das Mischoxid ausgewählt ist unter Ferriten der allgemeinen Formel $(M^a{}_{1-x-y}M^b{}_xFey)^{II}Fe_2{}^{III}O_4$ und Mischungen davon, wobei
$M^a$ ausgewählt ist unter Mn, Co und Ni,
$M^b$ ausgewählt ist unter Zn und Cd,
x für 0,05 bis 0,95, bevorzugt 0,1 bis 0,8, steht,
y für 0 bis 0,95 steht, und
die Summe aus x und y höchstens 1 beträgt.

4.　Zubereitung nach einem der vorhergehenden Ansprüche, wobei der volumengemittelte Teilchendurchmesser in einem Bereich von 4 bis 50 nm, bevorzugt 5 bis 30 nm, besonders bevorzugt 6 bis 15 nm liegt.

5.　Zubereitung nach Anspruch 1, wobei die Verbindung mit oberflächenaktiven Gruppen ausgewählt ist unter den Salzen starker anorganischer Säuren, gesättigten und ungesättigten Fettsäuren, quatemären Ammoniumverbindungen, Silanen und Mischungen davon.

6. Zubereitung nach einem der vorhergehenden Ansprüche, wobei die kohärente Phase ausgewählt ist unter Wasser, organischen Lösungsmitteln, polymerisierbaren Monomeren, Polymeren und Mischungen davon. ,

7. Zubereitung nach einem der Ansprüche 1 bis 6 in Form einer Klebstoffzusammensetzung

8. Verfahren zum Erwärmen einer Zubereitung, enthaltend eine kohärente Phase und wenigstens eine darin dispergierte teilchenförmige Phase superparamagnetischer, nanoskaliger Teilchen mit einem volumengemittelten Teilchendurchmesser im Bereich von 2 bis 100 nm, umfassend virenigstens ein Metallmischoxid der allgemeinen Formel $M^{II}M^{III}O_4$. worin $M^{II}$ für eine erste Metallkomponente steht, die wenigstens zwei voneinander verschiedene zweiwertige Metalle umfasst und $M^{III}$ für eine weitere Metallkomponente steht, die wenigstens ein dreiwertiges Metall umfasst, mit der Maßgabe, dass die Stöchiometrien der einzelnen Metalle so gewählt sind, dass das Mischoxid elektrisch neutral ist, **dadurch gekennzeichnet, dass** man die Zubereitung einem magnetischen oder elektromagnetischen Wechselfeld aussetzt.

9. Verfahren nach Anspruch 8, bei dem man die Zubereitung einem magnetischen Wechsatfeld mit einer Frequenz im Bereich von 30 Hz bis 100 MHz aussetzt.

10. Verfahren nach Anspruch 9, bei dem die eingesetzten nanoskaligen Teilchen eine magnetische Relaxationszeit im Bereich von 10 ns bis 100 ms, vorzugsweise 50 ns bis 10 ms, aufweisen.

11. Verfahren nach Anspruch 8, bei dem man die Zubereitung dem elektromagne tischen Wechsetfeld einer Mikrowellenstrahlung mlt einer Frequenz im Bereich von 0,3 bis 300 GHz und gegebenenfalls zusätzlich einem Gleichstrom-Magnetfeld mit einer Feldstärke im Bereich von 0.001 bis 10 Tesla aussetzt.

12. Verfahren nach einem der Ansprüche 8 bis 11, bei dem die Zubereitung unabhängig von der durch das Wechselfeld eingetragenen Energie nur bis zu einer Maximaltemperatur erwärmbar ist, wobei man nanoskalige Teilchen mit so ausgewählten zweiwertigen Metallen einsetzt, dass deren Curie-Temperatur mit der Maximaltemperatur korrespondiert.

13. Verfahren nach einem der Ansprüche 8 bis 12, bei dem man nanoskalige Teilchen mit so ausgewählten-.zweiwertigen-Metallen einsetzt, dass-bei einer Erwärmung durch ein magnetisches Wechselfeld die magnetische Relaxationszeit der Teilchen mit dem magnetischen Wechselfeld korreliert und bei einer Erwärmung durch ein elektromagnetisches Wechselfeld die Resonanzfrequenz der Teilchen mit dem elektromagnetischen Wechselfeld korreliert.

14. Verfahren zur Herstellung einer Klebeverbindung zwischen zwei Substratoberflächen, bei dem man

ii) auf wenigstens einen Teil der Oberfläche mindestens eines der Substrate eine Zubereitung, wie in einem der Ansprüche 1 bis 7 definiert, aufträgt, deren kohärente Phase wenigstens ein polymerisierbares Monomer und/oder wenigstens ein thermisch oder durch UV-Bestrahlung härtbares Polymer umfasst,
jj) die Substratoberflächen im Bereich der aufgetragenen Zubereitung miteinander in Kontakt bringt,
kk) die Substrate im Bereich der aufgetragenen Zubereitung zur Erwärmung einem magnetischen oder elektromagnetischen Wechselfeld aussetzt

15. Verfahren zum Lösen einer Klebeverbindung, enthaltend eine Zubereitung, wie in einem der Ansprüche 1 bis 7 definiert, wobei man diese zur Erwärmung einem magnetischen oder elektromagnetischen Wechselfeld aussetzt und sich die Klebeverbindung bei thermoplastischen Klebeverbindungen Ober den Erweichungspunkt erwärmt, bei duroplastischen Klebeverbindungen auf eine Temperatur erwärmt, die eine Rückspaltung bewirkt, so dass, gegebenenfalls unter mechanischer Belastung, die verklebten Substrate voneinander getrennt werden können.

16. Verwandung superparamagnetischer, nanoskaliger Teilchen wie In einem der Ansprüche 1 bis 6. definiert als disperse Phase von durch magnetische oder eiaktromagnetische Wechselfelder erwärmbaren nanopartikulären- zwei- oder mehrphasigen Zubereitungen

**Claims**

1. A nanoparticulate preparation containing a coherent phase and at least one particulate phase dispersed therein of superparamagnetic, nanoscale particles with a volume-averaged particle diameter of 2 to 100 nm, comprising at least one metal mixed oxide with the general formula $M^{II}M^{III}O_4$, where $M^{II}$ is a first metal component which comprises at least two different divalent metals and $M^{III}$ is another metal component which comprises at least one trivalent metal, with the proviso that the stoichiometries of the individual metals are selected so that the mixed oxide is electrically neutral, **characterized in that** the particles are provided over at least part of their surface with a single-layer or multi-layer coating containing at least one compound with ionogenic, ionic and/or nonionic surface-active groups.

2. A preparation as claimed in claim 1, **characterized in that** the mixed oxide is selected from ferrites with the general formula $(M^a_{1-x-y}M^b_xFey)''Fe_2'''O_4$,

    where

    $M^a$ is selected from Mn, Co, Ni, Mg, Ca, Cu, Zn, Y and V,

    $M^b$ is selected from Zn and Cd,

    $x = 0.05$ to $0.95$ and preferably $0.1$ to $0.8$,

    $y = 0$ to $0.95$ and

    the sum of x and y is at most 1,

    and mixtures thereof.

3. A preparation as claimed in claim 2, **characterized in that** the mixed oxide is selected from ferrites with the general formula $(M^a_{1-x-y}M^b_xFey)^{II}Fe_2^{III}O_4$,

    where

    $M^a$ is selected from Mn, Co and Ni,

    $M^b$ is selected from Zn and Cd,

    $x = 0.05$ to $0.95$ and preferably $0.1$ to $0.8$,

    $y = 0$ to $0.95$ and

    the sum of x and y is at most 1,

    and mixtures thereof.

4. A preparation as claimed in any of the preceding claims, **characterized in that** the volume-averaged particle diameter is in the range from 4 to 50 nm, preferably in the range from 5 to 30 nm and more particularly in the range from 6 to 15 nm.

5. A preparation as claimed in claim 1, **characterized in that** the compound containing surface-active groups is selected from the salts of strong inorganic acids, saturated and unsaturated fatty acids, quaternary ammonium compounds, silanes and mixtures thereof.

6. A preparation as claimed in any of the preceding claims, **characterized in that** the coherent phase is selected from water, organic solvents, polymerizable monomers, polymers and mixtures thereof.

7. A preparation as claimed in any of claims 1 to 6 in the form of an adhesive composition.

8. A process for heating a preparation containing a coherent phase and at least one particulate phase dispersed therein of superparamagnetic, nanoscale particles with a volume-averaged particle diameter of 2 to 100 nm, comprising at least one metal mixed oxide with the general formula $M^{II}M^{III}O_4$, where $M^{II}$ is a first metal component which comprises at least two different divalent metals and $M^{III}$ is another metal component which comprises at least one trivalent metal, with the proviso that the stoichiometries of the individual metals are selected so that the mixed oxide is electrically neutral, **characterized in that** the preparation is exposed to a magnetic or electromagnetic alternating field.

9. A process as claimed in claim 8, **characterized in that** the preparation is exposed to a magnetic alternating field with a frequency of 30 Hz to 100 MHz.

10. A process as claimed in claim 9, **characterized in that** the nanoscale particles used have a magnetic relaxation time of 10 ns to 100 ms and preferably 50 ns to 10 ms.

11. A process as claimed in claim 8, **characterized in that** the preparation is exposed to the electromagnetic alternating field of microwave radiation with a frequency of 0.3 to 300 GHz and, optionally, to a d.c. magnetic field with a field strength of 0.001 to 10 Tesla.

**12.** A process as claimed in any of claims 8 to 11, **characterized in that** the preparation can only be heated to a maximum temperature irrespective of the energy introduced by the alternating field, the nanoscale particles used containing divalent metals selected so that their Curie temperature corresponds to that maximum temperature.

**13.** A process as claimed in any of claims 8 to 12, **characterized in that** the nanoscale particles used contain divalent metals selected so that, where the particles are heated by a magnetic alternating field, the magnetic relaxation time of the particles correlates with the magnetic alternating field and, where the particles are heated by an electromagnetic alternating field, their resonance frequency correlates with the electromagnetic alternating field.

**14.** A process for forming an adhesive bond between two substrate surfaces, **characterized in that**

ii) a preparation as claimed in any of claims 1 to 7, of which the coherent phase comprises at least one polymerizable monomer and/or at least one heat- or UV-curable polymer, is applied to at least part of the surface of at least one of the substrates,

jj) the substrate surfaces are brought into contact with one another in the region where the preparation was applied and

kk) the substrates are heated in the region where the preparation was applied by exposure to a magnetic or electromagnetic alternating field.

**15.** A process for dissolving an adhesive bond containing a preparation as defined in any of claims 1 to 7, in which the preparation is heated by exposure to a magnetic or electromagnetic alternating field and, in the case of thermoplastic adhesive bonds, the adhesive bond is heated beyond the softening point and, in the case of thermoset adhesive bonds, is heated to a temperature at which reverse cleavage occurs, so that the bonded substrates can be separated from one another, optionally under mechanical load.

**16.** The use of superparamagnetic nanoscale particles as claimed in any of claims 1 to 6 as the disperse phase of nanoparticulate two-phase or multi-phase preparations heatable by magnetic or electromagnetic alternating fields.

**Revendications**

**1.** Préparation nanoparticulaire, contenant une phase cohérente et au moins une phase sous forme de particules qui y est dispersée de particules d'une taille à l'échelle du nanomètre, superparamagnétiques, présentant un diamètre volumique moyen des particules dans la plage de 2 à 100 nm, comprenant au moins un oxyde mixte métallique de formule générale M"M'''$O_4$, dans laquelle M" représente un premier composant métallique, qui comprend au moins deux métaux divalents différents l'un de l'autre et M''' représente un autre composant métallique, qui comprend au moins un métal trivalent, à condition que la stoechiométrie des différents métaux soit choisie de telle manière que l'oxyde mixte est électriquement neutre, **caractérisée en ce que** les particules présentent sur au moins une partie de leur surface un revêtement à une ou plusieurs couches, contenant au moins un composé avec des groupes tensioactifs ionogènes, ioniques et/ou non ioniques.

**2.** Préparation selon la revendication 1, l'oxyde mixte étant choisi parmi les ferrites de formule générale $(Ma_{1-x-y}Mb_x\text{-}Fe_y)^{II}Fe_2^{III}O_4$ et les mélanges de ceux-ci, où
$M^a$ est choisi parmi Mn, Co, Ni, Mg, Ca, Cu, Zn, Y et V,
$M^b$ est choisi parmi Zn et Cd,
x vaut 0,05 à 0,95, de préférence 0,1 à 0,8,
y vaut 0 à 0,95, et
la somme de x et y vaut au maximum 1.

**3.** Préparation selon la revendication 2, l'oxyde mixte étant choisi parmi les ferrites de formule générale $(Ma_{1-x-y}Mb_x\text{-}Fe_y)^{II}Fe_2^{III}O_4$ et les mélanges de ceux-ci, où
$M^a$ est choisi parmi Mn, Co et Ni,
$M^b$ est choisi parmi Zn et Cd,
x vaut 0,05 à 0,95, de préférence 0,1 à 0,8,
y vaut 0 à 0,95, et
la somme de x et y vaut au maximum 1.

**4.** Préparation selon l'une quelconque des revendications précédentes, le diamètre moyen volumique des particules étant situé dans une plage de 4 à 50 nm, de préférence de 5 à 30 nm, de manière particulièrement préférée de 6 à 15 nm.

5. Préparation selon la revendication 1, le composé avec les groupes tensioactifs étant choisi parmi les sels d'acides inorganiques forts, les acides gras saturés et insaturés, les composés d'ammonium quatemaires, les silanes et les mélanges de ceux-ci.

6. Préparation selon l'une quelconque des revendications précédentes, la phase cohérente étant choisie parmi l'eau, les solvants organiques, les monomères polymérisables, les polymères et les mélanges de ceux-ci.

7. Préparation selon l'une quelconque des revendications 1 à 6, sous forme d'une préparation adhésive.

8. Procédé pour chauffer une préparation, contenant une phase cohérente et au moins une phase sous forme de particules qui y est dispersée de particules d'une taille à l'échelle du nanomètre, superparamagnétiques, présentant un diamètre volumique moyen des particules dans la plage de 2 à 100 nm, comprenant au moins un oxyde mixte métallique de formule générale $M^{II}M^{III}O_4$, dans laquelle $M^{II}$ représente un premier composant métallique, qui comprend au moins deux métaux divalents différents l'un de l'autre et $M^{III}$ représente un autre composant métallique, qui comprend au moins un métal trivalent, à condition que la stoechiométrie des différents métaux soit choisie de telle manière que l'oxyde mixte est électriquement neutre, **caractérisé en ce qu'**on soumet la préparation à un champ alternatif magnétique ou électromagnétique.

9. Procédé selon la revendication 8, dans lequel on soumet la préparation à un champ alternatif magnétique d'une fréquence dans la plage de 30 Hz à 100 MHz.

10. Procédé selon la revendication 9, dans lequel les particules d'une taille à l'échelle du nanomètre utilisées présentent un temps de relaxation magnétique dans la plage de 10 ns à 100 ms, de préférence de 50 ns à 10 ms.

11. Procédé selon la revendication 8, dans lequel on soumet la préparation à un champ alternatif électromagnétique d'un rayonnement de micro-ondes présentant une fréquence dans la plage de 0,3 à 300 GHz et le cas échéant en plus à un champ magnétique de courant continu, présentant une intensité de champ dans la plage de 0,001 à 10 Tesla.

12. Procédé selon l'une quelconque des revendications 8 à 11, dans lequel la préparation, indépendamment de l'énergie introduite par le champ alternatif, ne peut être réchauffée qu'à une température maximale, en utilisant des particules d'une taille à l'échelle du nanomètre avec des métaux divalents choisis de telle manière que leur température de Curie correspond à la température maximale.

13. Procédé selon l'une quelconque des revendications 8 à 12, dans lequel on soumet des particules d'une taille à l'échelle du nanomètre avec des métaux divalents choisis de telle manière que lors d'un réchauffement par un champ alternatif magnétique, le temps de relaxation magnétique des particules corrèle avec le champ alternatif magnétique et lors d'un réchauffement par un champ alternatif électromagnétique, la fréquence de résonance des particules corrèle avec le champ alternatif électromagnétique.

14. Procédé pour la préparation d'un assemblage collé entre deux surfaces de substrat, dans lequel

ii) on applique sur au moins une partie de la surface d'au moins un des substrats une préparation telle que définie dans l'une quelconque des revendications 1 à 7, dont la phase cohérente comprend au moins un monomère polymérisable et/ou au moins un polymère durcissable par voie thermique ou par une irradiation aux UV,
jj) on met les surfaces des substrats en contact l'une avec l'autre au niveau de la préparation appliquée,
kk) on soumet les substrats dans la zone de la préparation appliquée pour le réchauffement à un champ alternatif magnétique ou électromagnétique.

15. Procédé pour défaire un assemblage collé, contenant une préparation, telle que définie dans l'une quelconque des revendications 1 à 7, dans lequel on soumet celle-ci, pour le réchauffement, à un champ alternatif magnétique ou électromagnétique et on chauffe l'assemblage collé, dans le cas de composés adhésifs thermoplastiques, au-dessus du point de ramollissement, dans le cas de composés adhésifs duroplastiques à une température qui provoque une dissociation en retour, de telle manière que les substrats assemblés par collage peuvent être séparés, le cas échéant sous une sollicitation mécanique.

16. Utilisation de particules d'une taille à l'échelle du nanomètre, superparamagnétiques, telles que définies dans l'une quelconque des revendications 1 à 6 comme phase dispersée de préparations nanoparticulaires, à deux phases ou plus, pouvant être réchauffées par des champs alternatifs magnétiques ou électromagnétiques.